# EUROPEAN PATENT SPECIFICATION

(11) **EP 2 584 390 B1**
(45) Date of publication and mention of the grant of the patent: **19.09.2018**
(21) Application number: 12186874.9
(22) Date of filing: 01.10.2012
(51) Int. Cl.: G02B 6/44

(54) **A central tube type optical fibre micro-cable**
Zentrale schlauchartiges Glasfaser-Mikrokabel
Micro-câble en fibre optique de type tube central

(30) Priority: 18.10.2011 CN 201120396823 U
(43) Date of publication of application: 24.04.2013
(73) Proprietor: Yangtze Optical Fibre and Cable Joint Stock Limited Company, Hongshan Wuhan Hubei 430073 (CN)
(72) Inventor: Ruan, Yunfang, Wuhan Hubei 430073 (CN); Chen, Feng, Wuhan Hubei 430073 (CN); Lu, Xingxing, Wuhan Hubei 430073 (CN); He, Jun, Wuhan Hubei 430073 (CN); Xiong, Zhuang, Wuhan Hubei 430073 (CN)
(74) Representative: Office Kirkpatrick

(56) References cited:
- EP-A2- 1 369 724
- WO-A1-2005/001537
- JP-A- 56 054 403
- US-A- 5 300 162
- US-A1- 2006 115 225

## Description

### FIELD OF THE INVENTION

The present invention relates to optical fibre cables and in particular to a central tube type optical fibre micro-cable with high optical fibre density, and in which fibres are able to be laid by a blowing-installation application or a JetNet type method in a pre-laid plastic micro-tube or cable micro-duct. While some embodiments will be described herein with particular reference to that application, it will be appreciated that the invention is not limited to such a field of use, and is applicable in broader contexts.

### BACKGROUND

With rapid development of fibre to the home (FTTH) installations in the field of Metropolitan Area Networks (MANs) and Access Networks (ANs), the micro-cables have been widely used by blowing installation application by blown fibre laying methods. Due to limitations of cable resources, particularly in built-up areas, standard industry demands favour techniques focussing on convenience of use and access to long distances of blowing-installation cables. Currently blowing-installation cables haves similar structure to conventional stranded type and central tube type cables. Conventional stranded type cables have a relatively large diameter, generally limited to about 5 mm or larger. Consequently, fibres can only be blown in these stranded type cables in tubes of size 10.0/8.0 mm (outer /inner diameter). Currently used central tube type cables have a relatively smaller diameter, generally around 4 mm, and can typically be blown in tubes of size only 7.0/5.5 mm (outer inner diameter).

In many countries, the construction of FTTH is achieved through bundles of fibres carrying tubes inserted into the fibre cables, which are in turn installed within cable micro-ducts. During the installation, these tubes are generally subject to high mechanical strain. Therefore, the supportive cables generally have one or two types of strength reinforcement structures: central tube type structures; and glass bead or microsphere type structures.

The material used for central tube type structures is generally polybutylene terephthalate (PBT), which is also used for loose tube designs. PBT undergoes retraction at low temperatures and optical fibre transmission becomes unstable. Further, fibres can only be blown over short distances along PBT cables. Glass bead or microsphere structured optical fibre cable have poor peeling capabilities and mechanical properties. These two effects make this type of cable unfavourable for use in working environment which is subject to high mechanical strain. Document US2006/0115225 discloses an optical fibre unit for air blown installation comprising an outer sheath and an intermediate sheath having a Youngs modulus identical to or lower than the outer sheath. Protrusions are designed on the outer sheath of the unit, resulting in a better resistance to fluid drag force. Document EP1369724 discloses the possibility of having grooves on the outer surface of the optical fibre unit to reduce the contact area between the cable and the conduit during its installation. It also discloses the use of a resin applied to the inner surface of the optical fibre containing tube to smooth this inner surface and limit signal loss resulting from a rough inner surface. Though the features disclosed in these two documents help to release some of the mechanical stress, they do not address electrostatic absorption or peeling properties.

US-A1-5300162 and JP-A-56054403 disclose optical fiber units comprising a tube made of polycarbonate.

WO-A1-2005/001537 disclose an optical fiber cable for air blown installation comprising an outer sheath made of polyethylene.

### SUMMARY OF THE INVENTION

An object of the present invention, in its preferred form, is to provide a central tube type optical fibre micro-cable that overcomes or alleviates the above-mentioned defects. This type of cable is easy to install and use, has a simpler structure than other known designs and is relatively low cost to manufacture.

The present invention provides a central tube type optical fibre micro-cable according to claim 1.

The diameter of the outer sheath is preferably in the range from 2.0 mm to 2.8 mm. The diameter of the loose tube is preferably in the range from 1.4 mm to 2.2 mm.

The central tube type optical fibre cable preferably includes a high tensile member between the outer sheath and the loose tube.

The loose tube is preferably configured to contain optical fibre bundles having 2 to 24 optical fibres.

The outer sheath preferably includes 4 to 24 circumferentially spaced longitudinally extending grooves. The maximum width of each groove is preferably in the range from 0.05 mm to 0.8 mm and the radial depth of each groove is preferably in the range from 0.05 mm to 0.8 mm.

According to the above solution, the outer sheath is made of a kind of material able to reduce electrostatic absorption.

Reference throughout this specification to "one embodiment", "some embodiments" or "an embodiment" means that a particular feature, structure or characteristic described in connection with the embodiment is included in at least one embodiment of the present invention. Thus, appearances of the phrases "in one embodiment", "in some embodiments" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

### DESCRIPTION OF DRAWINGS

Preferred embodiments of the invention will now be described, by way of examples only, with reference to the accompanying drawing in which:

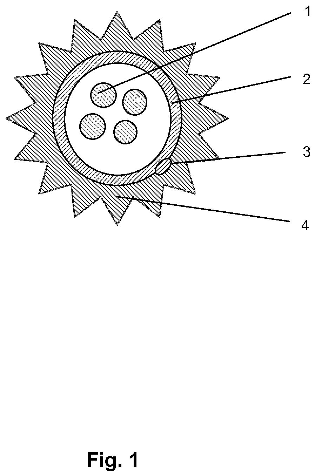

Fig. 1 illustrates a cross-section of an embodiment of the present invention.

### PREFERRED EMBODIMENT

A preferred embodiment of the present invention will now be described with reference to the drawing.

Referring to Fig. 1, there is illustrated a central tube type optical fibre micro-cable that can be inserted within a cable micro-duct. The micro-cable includes an outer sheath 4 and an inner loose tube 2 disposed within the outer sheath. Loose tube 2 is made of polycarbonate (PC) material and has a diameter of 1.8 mm. Four optical fibre bundles, e.g. bundle 1, are disposed within loose tube 2. Each optical fibre bundle 1 includes 2 to 24 optical fibres. Each bundle is coloured differently for identification by technicians during installation or maintenance. Loose tube 2 includes a water resistant lubricating fluid for reducing contact between the fibre bundles and reducing electrostatic absorption. Outer sheath 4 is made of polyethylene (PE) to reduce electrostatic absorption. Outer sheath 4 includes 16 circumferentially spaced longitudinally extending substantially v-shaped grooves. The maximum width of each groove is 0.3 mm and the radial depth of each groove is 0.3 mm. A high tensile member 3 formed of aramid yarn is disposed between outer sheath 4 and loose tube 2.

In some embodiments, loose tube 2 is able to contain more or less than four optical fibre bundles. In some embodiments, loose tube 2 includes a plurality of optical fibre bundles, each having different numbers of optical fibres. In one embodiment, one or more optical fibre bundles include more than 24 optical fibres. In some embodiments, each fibre bundle is marked with unique index to be identifiable. In some embodiments, the optical fibres within a bundle are individually coloured or marked, also to be identifiable. In some embodiments, outer sheath 4 is made of other materials able to reduce electrostatic absorption. In some embodiments, outer sheath 4 includes less than four grooves. In other embodiments, outer sheath 4 includes more than 16 grooves. In some embodiments, the grooves have shapes other than the illustrated v-shaped grooves and different dimensions. In some embodiments, high tensile member 3 is formed of high tensile materials other than aramid yarn, including metals, alloys or plastics materials.

Advantages of the present invention include:
1) The loose tube formed of PC reduces tube retraction issues and also improves the material transmission properties when compared to PBT tubes.
2) PC loose tube with a small diameter and light weight permits the fibres to be blown along the tube for a further distance than present tubes using a guide micro-duct of about 5.0/3.5 mm (inner/outer diameter).
3) The longitudinal grooves of the outer sheath assists in:
   a) Facilitating peeling of the cable when access to the inside of the cable is required; and
   b) Reducing the friction between the cable and the micro-duct wall during the blowing process and to improve airflow smoothly.
4) Use of polyethylene or other materials that reduce electrostatic absorption aids in reducing the blowing resistance during fibre blowing, which increases the distance over which cables can be blown.
5) Compared to micro-optical cables having the same number of optical fibres, the present invention reduces the complexity of the production process, requires fewer tube material resources and saves cost.

It should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Thus, while there has been described what are believed to be the preferred embodiments of the invention, those skilled in the art will recognize that other and further modifications may be made thereto without departing from the scope of the invention as defined by the claims. For example, any formulas given above are merely representative of procedures that may be used. Functionality may be added or deleted from the block diagrams and operations may be interchanged among functional blocks.

## Claims

1. A central tube type optical fibre micro-cable suitable to be blown or otherwise inserted within a cable micro-duct. including:
an outer sheath (4); and
a tube (2) disposed within the outer sheath (4);
wherein optical fibre bundles (1) or optical fibres are able to be blown or otherwise inserted within the tube; and the outer sheath (4) includes a plurality of circumferentially spaced longitudinally extending grooves;
**characterized in that** the tube is a loose tube (2) made of polycarbonate (PC); a high tensile member (3) is disposed between the outer sheath (4) and the loose tube (2); and
the outer sheath (4) is made of polyethylene, said polyethylene being able to reduce electrostatic absorption.

2. A central tube type optical fibre micro-cable according to claim 1 **characterized in that** the diameter of the outer sheath (4) is in the range 2.0 mm to 2.8 mm.

3. A central tube type optical fibre micro-cable according to claim 1 or claim 2 **characterized in that** the diameter of the loose tube (2) is in the range 1.4 mm to 2.2 mm.

4. A central tube type optical fibre micro-cable according to any one of the preceding claims **characterized in that** the loose tube (2) is configured to receive optical fibre bundles having 2 to 24 optical fibres.

5. A central tube type optical fibre micro-cable according to any one of the preceding claims **characterized in that** the outer sheath (4) includes 4 to 24 circumferentially spaced longitudinally extending grooves.

6. A central tube type optical fibre cable according to claim 5 **characterized in that** the maximum circumferential width of each groove is in the range 0.05 mm to 0.8 mm and the radial depth of each groove is in the range 0.05 mm to 0.8 mm.

## Patentansprüche

1. Optisches Fasermikrokabel vom Zentralrohrtyp, das in einen Kabel-Mikroduct eingeblasen oder anderweitig eingeführt werden soll, umfassend:
einen Außenmantel (4) und
ein Rohr (2), das in dem Außenmantel (4) angeordnet ist;
wobei optische Faserbündel (1) oder optische Fasern in das Rohr eingeblasen oder anderweitig eingeführt werden können und der Außenmantel (4) mehrere umlaufend beabstandete, sich in Längsrichtung erstreckende Rillen umfasst;
**dadurch gekennzeichnet, dass** das Rohr eine Bündelader (2) ist, die aus Polycarbonat (PC) hergestellt ist;
ein hochzugfestes Element (3) zwischen dem Außenmantel (4) und der Bündelader (2) angeordnet ist und der Außenmantel (4) aus Polyethylen hergestellt ist, wobei das Polyethylen die elektrostatische Absorption verringern kann.

2. Optisches Fasermikrokabel vom Zentralrohrtyp nach Anspruch 1, **dadurch gekennzeichnet, dass** der Durchmesser des Außenmantels (4) im Bereich von 2,0 mm bis 2,8 mm liegt.

3. Optisches Fasermikrokabel vom Zentralrohrtyp nach Anspruch 1 oder 2, **dadurch gekennzeichnet, dass** der Durchmesser der Bündelader (2) im Bereich von 1,4 mm bis 2,2 mm liegt.

4. Optisches Fasermikrokabel vom Zentralrohrtyp nach einem der vorhergehenden Ansprüche, **dadurch gekennzeichnet, dass** die Bündelader (2) dazu konfiguriert ist, optische Faserbündel mit 2 bis 24 optischen Fasern aufzunehmen.

5. Optisches Fasermikrokabel vom Zentralrohrtyp nach einem der vorhergehenden Ansprüche, **dadurch gekennzeichnet, dass** der Außenmantel (4) 4 bis 24 umlaufend beabstandete, sich in Längsrichtung erstreckende Rillen umfasst.

6. Optisches Fasermikrokabel vom Zentralrohrtyp nach Anspruch 5, **dadurch gekennzeichnet, dass** die maximale Umfangsbreite jeder Rille im Bereich von 0,05 mm bis 0,8 mm liegt und die radiale Tiefe jeder Rille im Bereich von 0,05 mm bis 0,8 mm liegt.

## Revendications

1. Micro-câble en fibre optique de type à tube central, convenant pour être soufflé ou inséré de toute autre façon à l'intérieur d'un microconduit, incluant :
une gaine externe (4) ; et
un tube (2) disposé à l'intérieur de la gaine externe (4) ;
où des faisceaux de fibres optiques (1) ou des fibres optiques peuvent être soufflés ou insérés de toute autre façon à l'intérieur du tube ; et
où la gaine externe (4) inclut plusieurs rainures s'étendant longitudinalement, espacées sur la circonférence ;
**caractérisé en ce que** le tube est un tube en structure libre (2) constitué de polycarbonate (PC) ;
un élément élastique (3) est disposé entre la gaine externe (4) et le tube en structure libre (2) ; et
la gaine externe (4) est constituée de polyéthylène, ledit polyéthylène étant capable de réduire l'absorption électrostatique.

2. Micro-câble en fibre optique de type à tube central selon la revendication 1, **caractérisé en ce que** le diamètre de la gaine externe (4) se situe dans la gamme de 2,0 mm à 2,8 mm.

3. Micro-câble en fibre optique de type à tube central selon la revendication 1 ou 2, **caractérisé en ce que** le diamètre du tube en structure libre (2) se situe dans la gamme de 1,4 mm à 2,2 mm.

4. Micro-câble en fibre optique de type à tube central selon l'une quelconque des revendications précédentes, **caractérisé en ce que** le tube en structure libre (2) est conçu pour recevoir des faisceaux de fibres optiques ayant de 2 à 24 fibres optiques.

5. Micro-câble en fibre optique de type à tube central selon l'une quelconque des revendications précédentes, **caractérisé en ce que** la gaine externe (4) inclut 4 à 24 rainures s'étendant longitudinalement, espacées sur la circonférence.

6. Micro-câble en fibre optique de type à tube central selon la revendication 5, **caractérisé en ce que** la largeur circonférentielle maximale de chaque rainure se situe dans la gamme de 0,05 mm à 0,8 mm, et la profondeur radiale de chaque rainure se situe dans la gamme de 0,05 mm à 0,8 mm.
